Europäisches Patentamt

European Patent Office

Office européen des brevets

(11) Publication number: **0 441 043 A1**

# (12) EUROPEAN PATENT APPLICATION

(21) Application number: **90313711.5**

(22) Date of filing: **14.12.90**

(51) Int. Cl.⁵: **H02K 3/50**

(30) Priority: **09.02.90 US 477367**

(43) Date of publication of application:
**14.08.91 Bulletin 91/33**

(84) Designated Contracting States:
**BE CH DE ES FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Ward, Robert Thomas**
**7368 Grand Avenue**
**Winter Park, FL 32792(US)**

(74) Representative: **van Berlyn, Ronald Gilbert**
**23, Centre Heights**
**London, NW3 6JG(GB)**

(54) Re-tightenable strain block for generator end turn windings and method for installing same.

(57) Apparatus and method for securing end turn portion of coils 25 of an electric generator 10. A wedge-shaped strain block 49 is inserted between a pair of top 28 and bottom 31 stator end turn windings. Compressible fillers 58, impregnated with an insulating epoxy resin, are located between the top 52 and bottom 55 surfaces of the strain block 49 and each of the windings 28,31. The strain block 49 is driven inward to secure the windings, such that the fillers 58 are compressed to about 50% of their original thickness. A pair of top and bottom channels 61 help guide the block 49 as it is inserted. Glass fiber bands 46 are then looped through openings 64 in the side of the wedge and around either of the windings 28,31. If desired, the end turn windings can be re-tightened at a later time by removing the glass bands 46, driving in the strain block 49 further, and resecuring the wedge in place.

FIG.2

## RE-TIGHTENABLE STRAIN BLOCK FOR GENERATOR END TURN WINDINGS AND METHOD FOR INSTALLING SAME

The invention relates to a support arrangement for end turn windings of a dynamoelectric machine, and more particularly to a re-tightenable strain block for supporting end turn windings of a turbine-generator.

End turn windings of large turbine-generators are generally secured or supported by the use of conformable pads or blocks located between the windings and various support rings which typically extend around the end winding structure. These pads are usually in the form of a resin-impregnated, resilient material comprised of felt pads or hose-like members. The use of these pads requires that a large supply of different size pads be provided so as to ensure that the specific thickness needed between the various end turn windings is available. These pads must be tightly fitted so as to keep the conductors secured during long periods of normal operation of the generator.

The end turn windings of a stator coil need to be supported to prevent excess vibration of the end windings which may occur during operation. Since vibrations normally occurs to the coils during operation, it may be difficult to maintain control over the degree of tightness between the pads and the conductors. A tight fit between the supports and the end turn windings is desirable to keep the windings securely supported over long periods of normal operation. These vibrations can result from associated mechanical vibration and abnormal short circuit or fault conditions during which very large electromagnetic forces are applied to the conductors. Because of these vibrations, some supports may become loose during normal operation.

Various designs exist for supporting the end turn windings of turbine-generators, such as that disclosed in U.S. Patent 3,949,257 which issued on April 6, 1976 to Cooper et al.; U.S. Patent 4,415,825 which issued on November 15, 1983 to Dailey et al.; and, U.S. Patent 4,800,314 which issued on January 24, 1989 to Ward et al. Each of the above-referenced patents is assigned to the present assignee. While each of these methods and apparatus are satisfactory in supporting the end turn windings of a generator stator, a design which is easily re-tightenable and not requiring a large number of different sized conformable members is desired.

U.S. Patents 4,942,326 issued July 17, 1990 and 4,950,934 issued August 21, 1990 describe securement systems for end winding conductors. These applications are also assigned to the present assignee. While these designs act to support end winding conductors in a satisfactory manner, a relatively simple system which allows for the proper fitting of each contact surface of a support arrangement to the multi-plane configuration of the coil basket formed by the support ring is desired.

It is a primary object of the present invention to provide a simple, re-tightenable support arrangement for the end turn windings of a generator stator.

It is another object of the present invention to provide for uniform construction of a driving block used to support the end turn windings.

The above objects are attained by the present invention, according to which, briefly stated, a support arrangement for end windings of a dynamoelectric machine comprises wedging means insertable between a pair of said windings. The wedging means has an opening through a side portion thereof and oriented transversely with respect to the slanted surface of the wedging means. Fastening means securable through the opening in the wedging means and around one of the end turn windings is provided for securing the wedging means with respect to the windings.

It is an advantage of the invention that the end turn windings are readily re-tightenable by removal of the fastening means and inserting the wedging means further between the end turn windings, and securing the wedging means anew.

Various other objects, features, and advantages of the invention will become more apparent by reading the following detailed description in conjunction with the drawings, which are shown by way of example only, wherein:

Figure 1 is a partial side view of a turbine-generator;

Figure 2 is a partial end view of the generator showing the end turn windings having the re-tightenable strain block of the present invention;

Figure 3 is a view taken along the lines III-III of Fig. 2;

Figure 4 is a representative view of the strain block at both its initial installation position and its final driven position; and

Figure 5 is a partial end view of a prior art strain block.

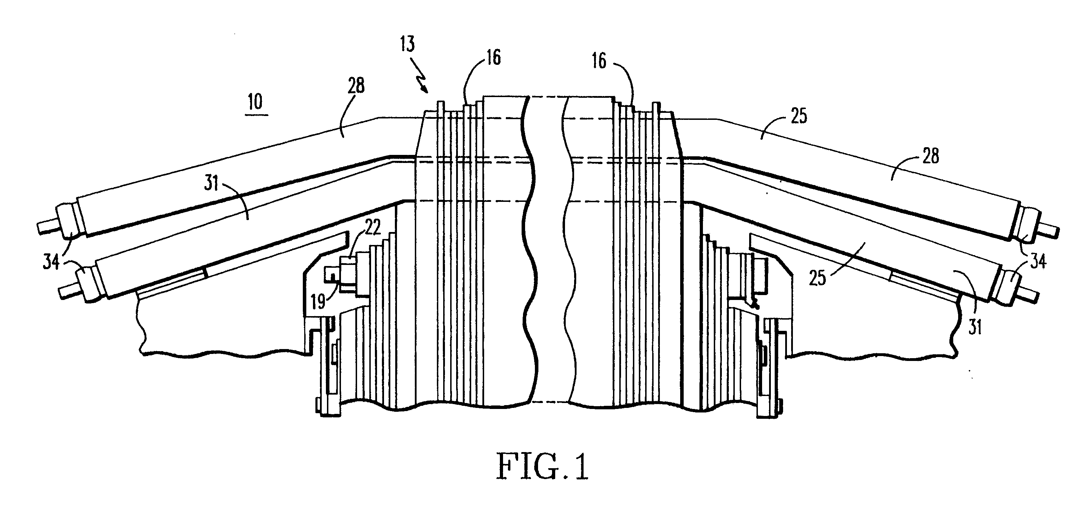

Referring now to the drawings in detail, Fig. 1 shows a partial side view of a typical turbine-generator 10. The generator 10 includes a core 13 comprised of a plurality of insulated laminations 16 secured together such as by a bolt 19 passing through aligned holes therein and secured by nut 22. A set of coils 25 are provided within the core 13 and project through either end thereof, one end being associated with an exciter (not shown) and the other end with a turbine (not shown). Each of the top 28 and bottom 31 end turn windings are provided with fittings 34 on the ends thereof, such as for a cooling fluid to be transported through the coils 25 during operation. The end turn windings 28,31 are generally supported by a support ring 37, of a conical shape, encircling the coils 25. The end turn windings need to be support in both the radial and circumferential directions to prevent damage during normal operations of the generator 10. More specifically, the end turn portion of the coils 25 are to be secured with respect to each other, such as by inserting the re-tightenable strain block of the present invention between the radial space between the top 28 and bottom 31 end turn windings.

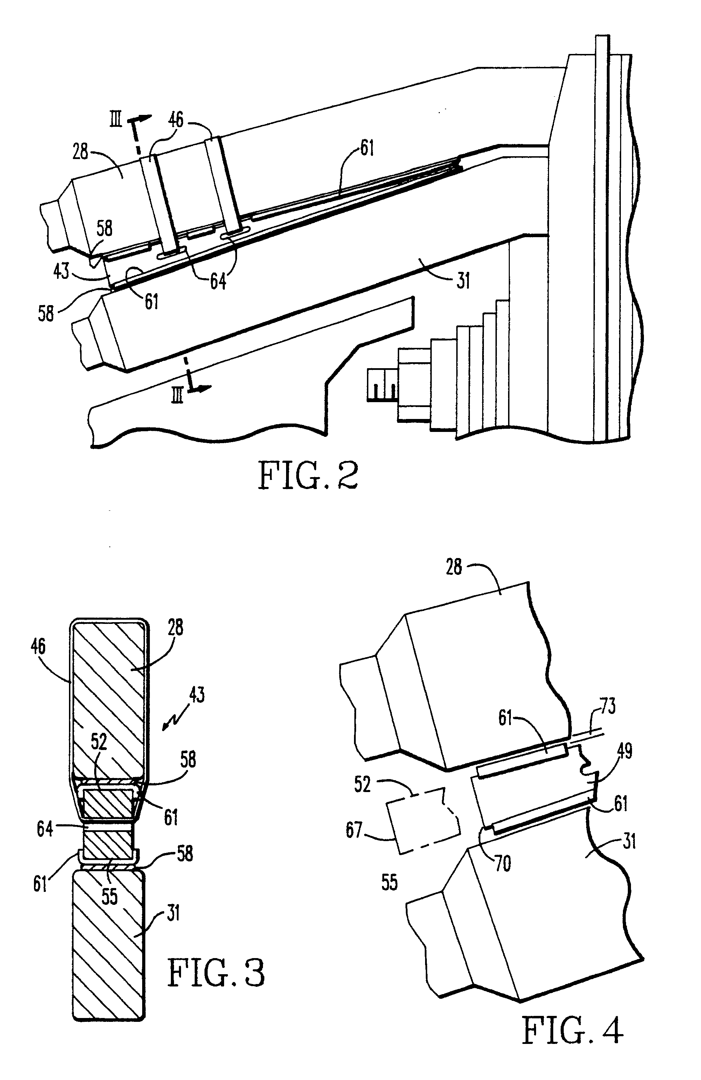

Referring now to Figs. 2 through 4, the retightenable strain block of the present invention is shown inserted between a pair of conventional top 28 and bottom 31 end turn windings. The apparatus of the present invention comprises a wedging means 43 which is inserted to form a tight fit between a top 28 and bottom 31 end turn windings of the coils 25. Glass bands 46, or other fastening means, are utilized to secure the wedging means 43 with respect to either the top 28 or bottom winding 31. Preferably, the wedging means 43 is secured to the top coil winding 28 since it is more accessible and thus provides for an easier field installation.

Preferably, the wedging means 43 is comprised of a strain, or wedge, block 49 having opposed slanted surfaces 52,55. The wedge block 49 is utilized to compress compressible fillers 58 which are disposed between both the top 28 and bottom 31 winding and each of the slanted surfaces 52,55 of the strain block 49. U-shaped channels 61 are disposed between the fillers 58 and the surfaces 52,55 of the wedge block 49 to facilitate retightening of the wedge block 49 and to serve as a guide for inserting the wedge block between the top 28 and bottom 31 windings. The strain block 49 also includes a least one, and preferably two, openings 64 through a side portion thereof, the slots being oriented transversely with respect to the slanted surfaces 52,55 of the wedge 49, to allow the glass fiber band 46 to be looped through the openings 64 and around the top winding 28.

The compressible fillers 58 are preferably made of a felt material and are chosen to complement the spacing between the top 28 and bottom 31 winding. The fillers 58, preferable formed of Dacron$^R$ and laminate materials, are chosen such that, when the wedge 49 is driven in from the undriven position 67 to the desired position, each filler 58 is compressed to about fifty percent (50%) of its original shape, thereby securing the top 28 and bottom 31 windings with respect to each other.

With this type of configuration a uniformly dimensioned strain block 49 can be used for each application. Suitable variable fillers 58 are then used between the channels 61 and the coils 25 to complement the spacing between the end turn windings and to provide the necessary compression to tightly secure the end turn portion of the coils 25.

Should it become necessary to re-tighten the end turn portion of the coils 25, it can be readily accomplished with the re-tightenable strain block of the present invention. All that is necessary is that the glass bands 46 be removed and preferably the wedge 49 driven in further. When the coils are at the required tightness, the strain block 49 can then be re-banded to the top winding 28. If need be, the block 49 can be removed for refitting without destroying it, as is sometimes done with conventional support arrangements, and thicker fillers 58 used therebetween.

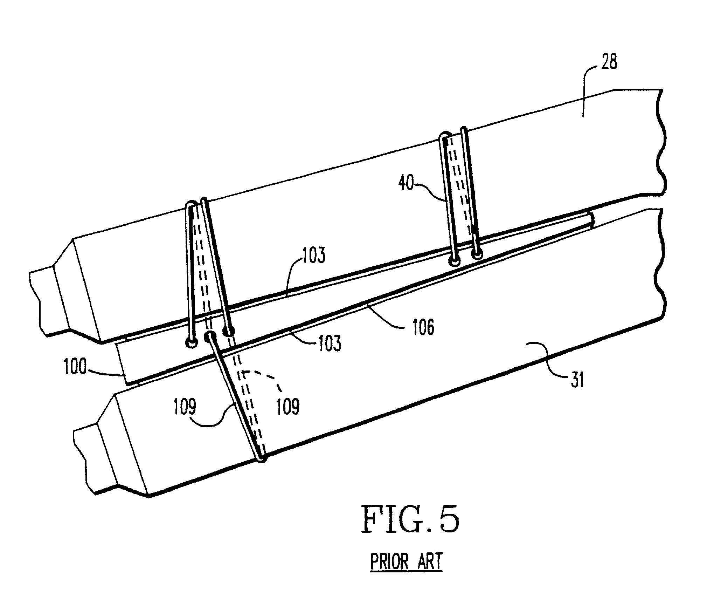

As shown in Figure 5, a conventional strain block 100 has surfaces 103 which need to be ground to desired dimensions in order to accommodate varying gap sizes between top 28 and bottom 31 end turn windings. After conformable material 106 is impregnated with resin, block 100 is driven in and banded 109. Should the block 100 become loose, it cannot be readily re-tightened. Once the resin in material 106 hardens, the block 100 and top 28 and bottom 31 windings are rigidly secured together, and the block 100 must be destroyed in order for the coils to be re-tightened. With the present invention, after the glass bands 46 are removed, the wedge 43 can be inserted further because, whereas the channels 61 are bonded to the compressible fillers 58, the wedge 43 can be further inserted between the channels 61. Thus, the present invention is easily re-tightenable, by the wedge being further inserted and re-banded. Therefore, when a conventional strain block 100 has been removed, the retightenable strain block 43 of the present invention can be installed.

In order to secure the end turn portion of the coils 25 with the present invention, the following steps are performed:

Each channel 61 is laid across the winding interface and appropriate fillers 58 are selected to suit the gap spacing therebetween. The principal fillers are chosen to complement this spacing. Depending on the compression desired, the assembly is fitted snug in the undriven position 67 (Fig. 4). The fillers 58 are then impregnated with an insulating, or epoxy, resin, and the block 49 is driven to its final inserted position 70. In this manner the strain block 49 compresses the fillers 58 a predetermined amount such that the windings 28,31 are secured with respect to each other. Preferably, this predetermined amount represents a fifty percent (50 %) compression of the felt fillers 58.

Finally, the glass fiber bands 46 are looped through each of the openings 64 in the strain block 49 and around the top winding 28, the ends thereof being secured together. Additionally, the glass fiber bands 46 may also be soaked in an insulating resin which, when hardened, prevents the glass bands from loosening and tightly secures the wedge block 49 in place. In order to re-tighten the wedge block 49 between the top 28 and bottom 31 windings, this process can be accomplished simply by cutting and removing the glass fiber bands 46, inserting the strain block 49 in further, and performing the step of looping glass fiber bands 46 through the openings 64 and around either the top or bottom coil.

The compressible, impregnated felt fillers 58 are easily conformable to the coil surface that is to be secured, and the tapered driving block 49 can be uniformly made to fit the particular generator 10 and stator core 13 end turn winding spacing. Preferably, a nominal 0.635 cm. (0.25 in.) spacing 73 is provided for the fillers 58 in the undriven position 67. An advantage of this invention is that it provides ease of fitting for coil variations, the wedging motion for proper felt compression and a retightenable feature in case of loosening due to vibratory effects. Thus, a simple method and apparatus is provided for securing the end turn windings of a generator stator, having a readily available re-tightening method.

While specific embodiments of the invention have been described in detail, it will be appreciated by those skilled in the art that the various modifications and alterations would be developed in light of the overall teachings of the disclosure. Accordingly, the particular arrangements disclosed are meant to be illustrative only and not limiting as the scope of the invention which is to be given the full breadth of the appended claims and in any and all equivalents thereof.

## Claims

1. A support arrangement for end windings (28,31) of a dynamo-electric machine, said support arrangement comprising:
   wedging means (43) insertable between a pair of said windings (28,31), said wedging means having an opening therein oriented transversely with respect to a slanted surface of said wedging means;
   fastening means securable through the opening of said wedging means (43) and around one of said windings; and
   a pair of opposed, generally U-shaped channels (61), one each disposed between said wedging means and said windings (28,31), said channels oriented such that said wedging means is situated therebetween.

2. The support arrangement of claim 1, wherein said wedging means (43) comprises:
   a wedge (49) having an included angle which comprises said slanted surface (52,55), the wedge further including the opening; and
   compressible filler means (58) disposed between each one of said pair of windings (28,31) and each of said U-shaped channels (61).

3. The support arrangement of claim 1, wherein said fastening means comprises a glass fiber band (46) looped through the opening and around one of said windings, the bands having ends which are secured together.

4. The support arrangement of claim 2, wherein said compressible filler means (58) is impregnated with an insulating resin.

5. A re-tightenable support for end windings (28,31) of an electric generator (10), said support comprising:
   a wedge (49) having an included angle insertable between a pair of said windings (28,31), the wedge having a pair of slots (64) therein oriented transversely with respect to a slanted surface of the wedge (49);
   compressible filler means (58) disposed between each one of said pair of windings (28,31) and the wedge;
   a pair of glass fiber bands (46), one each looped through one of said slots (64) and around one of said windings, the bands having ends which are secured together; and
   a pair of opposed, generally U-shaped channels (61), one each disposed between the wedge (49) and each of said compressible filler means.

6. The re-tightenable support of claim 5, wherein said compressible filler means (58) is impregnated with an epoxy resin.

7. In a dynamo-electric machine having top and bottom end windings (28,31), a re-tightenable support for securing said end windings, the support comprising:
   wedging means (43) insertable between the top and bottom windings, said wedging means having a pair of openings through a side portion thereof and oriented transversely with respect to a slanted surface of said wedging means;
   fastening means securable through said openings of said wedging means and around one of said windings; and

a pair of channel means (61), one each disposed between said wedging means and each of said top and bottom windings.

8. The dynamo-electric machine of claim 7, wherein said wedging means (43) of the support comprises:

a wedge (49) having an included angle which comprises said slanted surface (52,55), the wedge further including the pair of openings therein; and

two compressible fillers (58), a top filler disposed between the top winding and one of said channel means, and a bottom filler disposed between the bottom winding and the other of said channel means.

9. The dynamo-electric machine of claim 8, wherein each of said channel means further comprises opposed, generally U-shaped channels (61), a top channel disposed between the wedge (49) and the top filler, and a bottom channel disposed between the wedge and the bottom filler, said channels oriented such that the wedge is situated therebetween.

10. The dynamo-electric machine of claim 9, wherein said fastening means comprises a pair of glass fiber bands (46), one each looped through one of said openings and around the top winding, the bands having ends which are secured together.

11. The dynamo-electric machine of claim 9, wherein said fastening means comprises a pair of glass fiber bands (46), one each looped through one of said openings and around the bottom winding, the having ends which are secured together.

12. A method of re-tightenably securing end turn windings of a dynamo-electric machine, the method comprising the steps of:

i. locating a wedge-shaped member having an opening through a side portion thereof between a pair of said windings;

ii. placing a pair of compressible fillers between each one of said pair of windings and the wedgeshaped member;

iii. inserting the wedge-shaped member between said fillers and between said windings, thereby compressing said fillers a predetermined amount; and

iv. looping a glass band through said opening and around one of said windings and securing the ends thereof together, whereby said end turn windings are secured with respect to each other.

13. The method as recited in claim 13, further comprising the step of impregnating said fillers with an insulating resin.

FIG.1

FIG.2

FIG.3

FIG.4

FIG. 5

PRIOR ART

European
Patent Office

**EUROPEAN SEARCH
REPORT**

Application Number

**EP 90 31 3711**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | DE-B-1 190 555 (SIEMENS-SCHUCKERT)<br>* column 3, lines 41 - 65; figure 2. *<br>- - - | 1,2,4,12,<br>13.,5-9. | H 02 K 3/50 |
| Y,A | US-A-3 391 294 (MOXIE ET AL)<br>* column 3, line 24 - column 4, line 57; figures 1, 2. *<br>- - - | 1,2,4,12,<br>13.,5-9. | |
| A | FR-A-1 366 320 (COMPAGNIE ELECTRO-MECANIQUE)<br>* page 1, right-hand column, line 40 - page 2, left-hand column, line 26; figures 1-3. *<br>- - - | 1,5,7. | |
| A | US-A-2 484 007 (WESTINGHOUSE)<br>* column 2, line 52 - column 3, line 10; figure 1. *<br>- - - | 1,5,7. | |
| A | US-A-4 618 795 (COOPER ET AL)<br>* column 3, line 9 - column 4, line 2; figures 1-4. *<br>- - - | 1-8,<br>10-13. | |
| A | DE-A-2 259 576 (SCHORCH)<br>* page 5, line 4 - page 6, line 3; figure 1. *<br>- - - - - | 3,5,10,11. | |
| | | | **TECHNICAL FIELDS SEARCHED (Int. Cl.5)**<br><br>H 02 K |

The present search report has been drawn up for all claims

| Place of search | Date of completion of search | Examiner |
|---|---|---|
| The Hague | 17 April 91 | TIO K.H. |